# EUROPÄISCHE PATENTSCHRIFT

(11) **EP 3 194 203 B1**
(45) Veröffentlichungstag und Bekanntmachung des Hinweises auf die Patenterteilung: **30.12.2020**
(21) Anmeldenummer: 15745403.4
(22) Anmeldetag: 05.08.2015
(51) Int. Cl.: B60N 2/07

(54) **FAHRZEUGSITZ**
VEHICLE SEAT
SIÈGE DE VÉHICULE

(30) Priorität: 20.09.2014 DE 102014014138
(43) Veröffentlichungstag der Anmeldung: 26.07.2017
(73) Patentinhaber: Audi AG, 85045 Ingolstadt (DE)
(72) Erfinder: REUSCHEL, Jens, Dietmar, 85053 Ingolstadt (DE); DIEDRICHS, Vanessa, 41464 Neuss (DE)
(86) Internationale Anmeldenummer: PCT/EP2015/001615
(87) Internationale Veröffentlichungsnummer: WO 2016/041612

(56) Entgegenhaltungen:
- EP-A1- 2 620 366
- EP-A2- 1 747 935
- DE-B3- 10 252 204
- FR-A1- 2 759 648
- GB-A- 647 459
- US-A1- 2011 260 482
- US-A1- 2012 061 548

## Beschreibung

Die Erfindung betrifft einen Fahrzeugsitz, umfassend eine eine Bahnkurve beschreibende Führung, entlang der er bewegbar ist.

In Zukunft wird ein teilautonomes bzw. stark assistiertes Fahren immer weiter in den Vordergrund rücken. Hierbei wird der Fahrer von der primären Fahraufgabe zumindest teilweise entlastet, indem das Fahrzeug selbst zumindest teilweise die Längs- und Querführung übernimmt respektive den Fahrer bei einer Reihe von Fahraufgaben unterstützt. Je höher der Umfang oder Grad des autopilotierten Fahrens ist, umso reduzierter ist die Einbindung des Fahrers in den eigentlichen Fahrbetrieb. Dies ermöglicht es dem Fahrer, sich anderen Tätigkeiten zu widmen, beispielsweise einer verstärkten Kommunikation mit dem Beifahrer oder den Fondpassagieren, wie auch die Möglichkeit besteht, bürotypische Tätigkeiten wie Lesen und Schreiben von E-Mails und Ähnliches während der Fahrt vorzunehmen. Auch können Entertainmentprogramme wesentlich intensiver und konzentrierter wahrgenommen werden, da sich der Fahrer nur in reduziertem Umfang auf die Fahraufgabe konzentrieren muss.

Da sich unmittelbar vor dem Fahrer das Lenkrad befindet, ist mitunter für paralleles Arbeiten wie beispielsweise die Nutzung eines Laptops oder eines anderen tragbaren Geräts wenig Platz gegeben. Auch ist die Kommunikation mit dem Beifahrer oder den Fondpassagieren aufgrund der Sitzausrichtung des Fahrersitzes in Richtung der Fahrzeuglängsachse schwierig, da sich der Fahrer, wenn er sich dem Beifahrer oder den Fondpassagieren zuwenden möchte, relativ weit auf dem Sitz verdrehen muss, was durch eine für die Fahraufgabe optimierte Sitzgeometrie nicht oder nur eingeschränkt möglich ist.

Bekannt sind Sitzverstellungen, bei denen durch das Absenken von Sitzwangen, das Anheben der Sitzfläche, das Drehen des Gesamtsitzes oder durch seitliches Verschieben des Sitzes der Komfort der Insassen des Fahrzeugs verbessert werden kann. In heutigen Pkw-Konzepten ist aufgrund des engen Raums zwischen Mittelkonsole und Sitz eine Drehung des Fahrzeugsitzes zur Fahrzeugmitte nicht oder nur minimal möglich. Eine Kommunikation zwischen einander zugewandten Insassen ist daher nicht möglich. Die EP 2620366 zeigt zwei Fahrzeugsitze, die jeweils entlang einer Bahnkurve verschiebbar sind.

Der Erfindung liegt daher die Aufgabe zugrunde, einen Fahrzeugsitz anzugeben, der eine dahingehend verbesserte Sitzausrichtung ermöglicht.

Zur Lösung dieser Aufgabe ist ein Fahrzeugsitz mit den Merkmalen des Anspruchs 1 vorgesehen.

Bei dem erfindungsgemäßen Fahrzeugsitz ist es somit beispielsweise bei autopilotiertem Fahren möglich, den Fahrzeugsitz entlang der Führung so zu bewegen, dass er aus der Fahrzeugmitte heraus nach außen und entlang der Bahnkurve, die die Führung beschreibt, verschoben wird, wobei er um seine Hochachse mit seiner Frontseite in Richtung der Fahrzeugmitte gedreht wird.

Die Bahnkurve, die die Führung beschreibt, besitzt hierbei zusätzlich zu den Bewegungskomponenten entlang der Fahrzeuglängs- und Fahrzeugquerachse auch eine Komponente entlang der Hochachse des Kraftfahrzeugs bzw. des Fahrzeugsitzes. Durch die weitgehend beliebige Ausgestaltung der Führung und somit der Bahnkurve wird eine Umpositionierung des Fahrzeugsitzes derart erreicht, dass die Kommunikation zwischen den Insassen verbessert werden kann. Durch die Bewegung des Fahrzeugsitzes aus der Mitte nach außen und die Drehung um seine Hochachse in Richtung der Fahrzeugmitte wird eine Position erreicht, in der der Passagier eine der Fahrzeugmitte und somit dem Beifahrer zugewandte Sitzposition einnehmen kann.

Die Führung weist hierfür eine Schiene, insbesondere ein Paar von Schienen, auf. Der Fahrzeugsitz ist beispielsweise über Gleitkörper, Schlitten oder Rollen oder dergleichen, wodurch eine Relativbewegung des Fahrzeugsitzes zu der Schiene ermöglicht wird, entlang der Führung bewegbar.

Eine bevorzugte Weiterbildung der Erfindung kann darin bestehen, dass der Fahrzeugsitz eine Haltevorrichtung aufweist, durch die er auf der Führung, vorzugsweise durch eine Klemmung, lösbar in einen festgestellten, d. h. fixierten Zustand bringbar ist. Die Feststellung kann beispielsweise durch Körper vorgenommen werden, mit denen der Fahrzeugsitz entlang der Führung bewegt wird, oder durch separate Elemente. Alternativ kann der Fahrzeugsitz auf andere Weise kraft- oder formschlüssig festgestellt werden, beispielsweise durch einen in eine Ausnehmung der Schiene eingreifenden Bolzen.

Eine bevorzugte Weiterbildung des erfindungsgemäßen Fahrzeugsitzes kann darin bestehen, dass die Haltevorrichtung dazu ausgebildet ist, den Fahrzeugsitz entweder stufenlos oder in festgelegten Positionen auf der Führung in den festgestellten Zustand zu bringen. Dadurch ist es möglich, dass der Fahrzeugsitz in jeder beliebigen Position, die den Insassen des Kraftfahrzeugs am bequemsten erscheint, festgestellt werden kann. Ebenso ist es möglich, dass neben Endpunkten der Führung auch weitere Positionen des Fahrzeugsitzes einnehmbar sind. Diese Positionen können beispielsweise in einer Steuerungseinrichtung des Fahrzeugsitzes oder des Kraftfahrzeugs abgelegt sein und bei Bedarf, vorzugsweise automatisch, angefahren werden. Diese Sitzbewegung kann durch eine Aktivierung des Autopilotsystems ausgelöst werden.

Vorzugsweise weist die Haltevorrichtung eine Fernentriegelung auf, die dazu ausgebildet ist, den Fahrzeugsitz in dem festgestellten Zustand zu lösen. Diese Fernentriegelung kann zum einen elektrisch oder elektronisch ansteuerbar sein, um ein elektrisches bzw. automatisches Lösen und Feststellen des Fahrzeugsitzes zu ermöglichen. Alternativ kann die Fernentriegelung auch für eine mechanische Bedienung durch den Insassen ausgelegt sein, um den Fahrzeugsitz in dem festgestellten Zustand beispielsweise durch die Betätigung eines Hebels oder eines Seilzugs zu lösen und nach Einnahme der gewünschten Position durch Loslassen des Hebels den Fahrzeugsitz wieder in den festgestellten Zustand zu bringen. Die Fernentriegelung löst dazu die kraft- bzw. formschlüssige Feststellung und/oder Klemmung des Fahrzeugsitzes auf der Führung bzw. der Schiene. Somit wird eine rein mechanische Verstellbarkeit des Fahrzeugsitzes entlang der Führung und der Neigung der Sitzfläche oder des Sitzfeldes ermöglicht.

Eine besonders bevorzugte Ausgestaltung des erfindungsgemäßen Fahrzeugsitzes kann vorsehen, dass der Fahrzeugsitz einen Antrieb zum Bewegen des Fahrzeugsitzes entlang der Führung aufweist. Dies bietet den Vorteil, dass die Insassen den Fahrzeugsitz nicht manuell bewegen müssen, sondern dass der Fahrzeugsitz zum einen stufenlos durch Betätigung eines Schalters elektrisch in die anzufahrende Position bewegt werden kann oder vollständig automatisch die gewünschte Position anfährt, beispielsweise beim Aktivieren des Autopiloten.

Der erfindungsgemäße Fahrzeugsitz weist einen Aktuator auf, der dazu ausgebildet ist, wenigstens einen Teil einer Sitzfläche des Fahrzeugsitzes um wenigstens eine Achse zu neigen. Vorzugsweise kann die Sitzfläche bzw. ein Teil der Sitzfläche mittels des Aktuators um die Längsachse und/oder die Querachse des Fahrzeugsitzes geneigt werden, die im Ausgangszustand der Längs- und Querachse des Kraftfahrzeugs entsprechen kann. Dadurch kann zusätzlich zu der Verstellung des Fahrzeugsitzes entlang der Bahnkurve eine Sitzneigung eingestellt werden. Es kann dazu vorgesehen sein, dass ein kleinerer Teil der gesamten Sitzfläche, also ein begrenztes Sitzfeld, geneigt wird, während der Rest der Sitzfläche im Ausgangszustand verbleibt. Die Neigung ist derart an die Bewegung des Fahrzeugsitzes entlang der Führung gekoppelt, dass ein Neigungswinkel der Sitzfläche oder des begrenzten Sitzfelds gegenüber der Fahrzeuglängs- oder der Fahrzeugquerachse mit zunehmender Entfernung des Fahrzeugsitzes von der Fahrzeugmitte zunimmt und mit abnehmender Entfernung von der Fahrzeugmitte reduziert wird.

Der erfindungsgemäße Fahrzeugsitz kann dazu wenigstens ein durch den Aktuator verstellbares Flächenelement aufweisen, das dazu ausgebildet ist, die Sitzfläche oder das begrenzte Sitzfeld entlang wenigstens einer Achse zu neigen. Ein solches Flächenelement kann als Teil der Sitzfläche ausgebildet sein, dessen Neigung mittels des Aktuators entlang wenigstens einer Achse eingestellt werden kann. Der Aktuator kann ferner dazu ausgebildet sein, den wenigstens einen Teil der Sitzfläche und/oder das Flächenelement elektrisch oder pneumatisch zu verstellen. Es ist ferner vorgesehen, dass der Aktuator eine mechanische Verstellung, also beispielsweise durch die Betätigung eines Drehhebels durch den Insassen, erlaubt. Ebenso ist es möglich, dass das Flächenelement eine charakteristische Form aufweist, die der gewünschten Sitzflächenform entspricht und von unten gegen diese bewegt wird, um die Sitzfläche entsprechend umzuformen.

Eine bevorzugte Ausführung des erfindungsgemäßen Fahrzeugsitzes kann vorsehen, dass seine Führung eine Längsverstellung aufweist, die dazu ausgebildet ist, den Fahrzeugsitz entlang der Längsachse des Kraftfahrzeugs zu verstellen. Dies bietet den Vorteil, dass der Fahrzeugsitz wie üblich entlang der Fahrzeuglängsachse verstellbar ist, um den Insassen die gewohnte Einstellung der Position des Fahrzeugsitzes entlang der Fahrzeuglängsachse zu ermöglichen. Die Verstellung des Fahrzeugsitzes entlang der Führung ist hierbei von der Längsverstellung entkoppelt. Der erfindungsgemäße Fahrzeugsitz kann somit in jeder Position auf der Längsverstellung entlang der Führung verstellt werden.

Daneben betrifft die Erfindung ein Kraftfahrzeug, umfassend wenigstens einen, vorzugsweise zwei nebeneinander angeordnete erfindungsgemäße Fahrzeugsitze. Im Kraftfahrzeug ist natürlich ein oder sind entsprechende mehrere Bedienelemente vorgesehen, die die entsprechende Sitzverstellung ermöglichen. Denkbar ist es, ausgehend von einer aktiven Fahrt mit zugeordneter Sitzposition, durch Betätigen eines Bedienelements die geänderte Sitzposition für ein (teil-)autonomes Fahren auszulösen. Wird die Taste erneut betätigt und wird wieder zu einem aktiven Fahrbetrieb übergegangen, so wird die Sitzposition reversibel zurückgestellt.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: eine perspektivische Ansicht eines erfindungsgemäßen Fahrzeugsitzes;
- Fig. 2: den Fahrzeugsitz von Fig. 1 in einer Draufsicht in einem erfindungsgemäßen Kraftfahrzeug im Ausgangszustand; und
- Fig. 3: das Kraftfahrzeug von Fig. 2 bei verstellter Position des Fahrzeugsitzes.

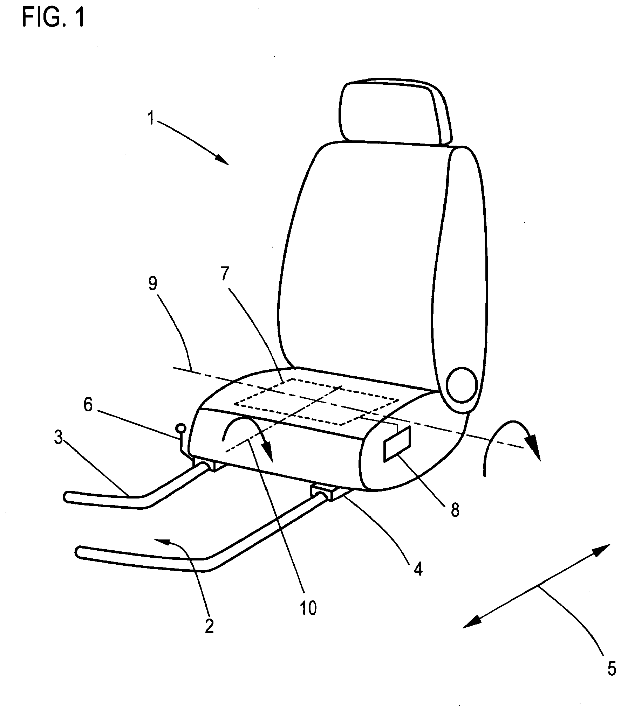

Fig. 1 zeigt einen Fahrzeugsitz 1, umfassend eine eine Bahnkurve beschreibende Führung 2, entlang der er bewegbar ist. Die Führung 2 umfasst Schienen 3, auf denen der Fahrzeugsitz 1 mit Gleitkörpern 4 bewegbar ist. In die Gleitkörper 4 ist eine Haltevorrichtung integriert, die nicht näher dargestellt ist. Diese ist dazu ausgebildet, den Fahrzeugsitz 1 an jeder Position der Schienen 3 in einem festgestellten, fixierten Zustand zu halten. Die Haltevorrichtung klemmt dazu die Gleitkörper 4 auf den Schienen 3 fest, wodurch der Fahrzeugsitz 1 festgestellt wird.

Diese durch Klemmung erreichte Feststellung des Fahrzeugsitzes 1 durch die Haltevorrichtung kann mittels einer Fernentriegelung 6 durch einen Insassen, der nicht näher dargestellt ist, gelöst werden. Durch Betätigen eines Hebels der Fernentriegelung 6 wird die durch die Haltevorrichtung erzeugte Klemmung der Gleitkörper 4 auf den Schienen 3 gelöst, wodurch der Fahrzeugsitz 1 entlang der Führung 2 auf den Schienen 3 bewegbar ist. Beim Loslassen der federbelasteten Fernentriegelung 6 bewirkt die Haltevörrichtung erneut die Klemmung der Gleitkörper 4 auf den Schienen 3. Somit ist der Fahrzeugsitz 1 wieder festgestellt. Es ist ebenfalls möglich, die Haltevorrichtung elektrisch, pneumatisch oder hydraulisch mittels einer Steuerungseinrichtung zu betätigen. Zusätzlich ist der Fahrzeugsitz 1 auf einer Längsverstellung angeordnet, die eine bei Verstellung des Fahrzeugsitzes 1 entlang der Fahrzeuglängsache zulässt. Dies ist durch den Doppelpfeil 5 dargestellt.

Ferner ist in Fig. 1 dargestellt, dass der Fahrzeugsitz 1 ein Flächenelement 7 aufweist, das einem Teil der Sitzfläche des Fahrzeugsitzes 1 entspricht. Das Flächenelement 7 kann mittels eines Aktuators 8 um Achsen 9 und 10 geneigt werden, die der Längs- und der Querachse des Fahrzeugsitzes 1 entsprechen. Der Aktuator 8 ist als elektrischer Aktuator ausgebildet, kann jedoch ebenfalls pneumatisch oder mechanisch ausgebildet sein. Die Gleitkörper 4 sind parallel zueinander und parallel zur Längsachse 10 des Fahrzeugsitzes angeordnet. Je nach Ausgestaltung der Führung 2 ist auch eine Anordnung parallel zur Querachse 9 des Fahrzeugsitzes 1 möglich.

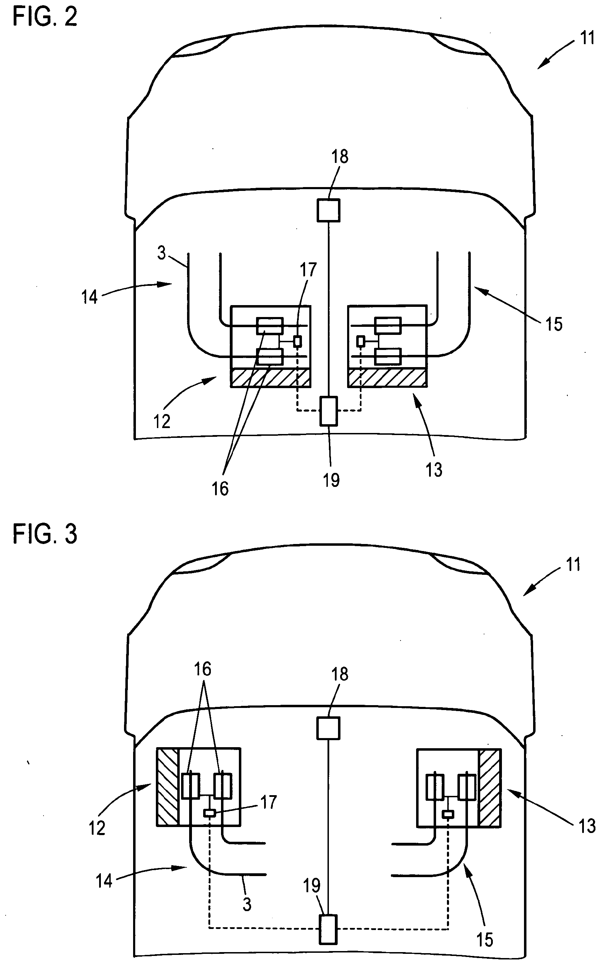

Eine solche Anordnung der Gleitkörper 4 ist in Fig. 2 dargestellt, die eine Draufsicht auf ein Kraftfahrzeug 11 darstellt. Das Kraftfahrzeug 11 weist Fahrzeugsitze 12 und 13 auf, wobei der Fahrzeugsitz 12 als Fahrersitz und der Fahrzeugsitz 13 als Beifahrersitz ausgebildet ist. Die Fahrzeugsitze 12 und 13 gleichen dem Fahrzeugsitz 1 bis auf die Anordnung der Führungen 14 und 15 und der Gleitkörper 16. Diese sind parallel zur Achse 9 ausgerichtet. Ferner weisen die Fahrzeugsitze 12, 13 jeweils einen Antrieb 17 auf, der dazu ausgebildet ist, den Fahrzeugsitz 12, 13 entlang der Führung 14, 15 zu bewegen. Die Fahrzeugsitze 12, 13 befinden sich in der in Fig. 2 gezeigten Ansicht in der Ausgangsposition, die vorliegt, wenn das Kraftfahrzeug 11 in einem durch einen Fahrer aktiv gelenkten Zustand betrieben wird. Wird ein zumindest teilautonomes Fahren aktiviert, kann mittels eines Betätigungselements 18 ein Signal an eine Steuerungseinrichtung 19 übermittelt werden, die die Antriebe 17 der Fahrzeugsitze 12, 13 derart ansteuert, dass diese in eine für teilautonomes Fahren bequemere Position bewegt werden.

Diese Position ist in Fig. 3 dargestellt. Durch das Bewegen der Fahrzeugsitze 12, 13 entlang ihrer Führungen 14, 15 wurden die Fahrzeugsitze 12, 13 um ihre Hochachse gedreht, so dass ihre Frontseiten zur Fahrzeugmitte zeigen. Zusätzlich wurden die Fahrzeugsitze 12, 13 durch Bewegen entlang der Führungen 14, 15 aus der Mitte nach außen bewegt. Die Insassen erhalten daher mehr Beinfreiheit. In der in Fig. 3 dargestellten Situation ist es den Insassen des Fahrzeugs 11 leichter möglich, zu arbeiten oder sich zu unterhalten. Es ist ebenso möglich, abweichend von dem jeweiligen Anfang und Ende der Führungen 14, 15 die Fahrzeugsitze 12, 13 an jeder beliebigen Position der Führung zu positionieren. Dadurch können die Insassen eine für sich bequeme Position auswählen. Selbstverständlich ist es ebenso möglich, die Führung 14, 15 anderweitig auszugestalten, so dass eine weitere Drehung der Fahrzeugsitze 12, 13 in Richtung der Fondpassagiere, sowie eine Veränderung der Sitzhöhe durch eine Führung 2, 14, 15 mit einem Anteil in Richtung der Hochachse des Fahrzeugsitzes 12, 13 bzw. des Kraftfahrzeugs 11 möglich ist, wodurch in einem vollständig automatisierten Fahrbetrieb eine weitere Verbesserung der Kommunikation im Kraftfahrzeug 11 ermöglicht wird.

Ferner ist es in der in Fig. 3 dargestellten Situation möglich, mittels der Aktuatoren 8 und Flächenelementen 7 die Sitzfläche entlang der Achsen 9 und 10 der Fahrzeugsitze 12, 13 zu neigen. Dadurch wird das Einnehmen einer bequemen Position für die Fahrzeuginsassen weiter verbessert.

## Patentansprüche

1. Fahrzeugsitz (1, 12, 13), der entlang einer eine Bahnkurve beschreibenden Führung (2, 14, 15) bewegbar ist, die so ausgebildet ist, dass der Fahrzeugsitz (1, 12, 13) durch eine Bewegung entlang der Führung (2, 14, 15) von der Fahrzeugmitte weg bewegbar und mit seiner Frontseite um seine Hochachse in Richtung Fahrzeugmitte drehbar ist,
**dadurch gekennzeichnet,**
**dass** der Fahrzeugsitz (1, 12, 13) einen Aktuator (8) aufweist, der dazu ausgebildet ist, wenigstens einen Teil einer Sitzfläche des Fahrzeugsitzes (1, 12, 13) um wenigstens eine Achse (9, 10) zu neigen, wobei eine Neigung der Sitzfläche oder des wenigstens einen Teils der Sitzfläche derart an die Bewegung des Fahrzeugsitzes (1, 12, 13) gekoppelt ist, dass ein Neigungswinkel der Sitzfläche oder des wenigstens einen Teils der Sitzfläche gegenüber wenigstens einer der Achsen (9, 10) mit zunehmender Entfernung des Fahrzeugsitzes (1, 12, 13) von der Fahrzeugmitte zunimmt und mit abnehmender Entfernung des Fahrzeugsitzes (1, 12, 13) von der Fahrzeugmitte reduziert wird.

2. Fahrzeugsitz nach Anspruch 1,
**dadurch gekennzeichnet,**
**dass** die Führung (2, 14, 15) einen sich entlang der Hochachse des Fahrzeugsitzes (1, 12, 13) erstreckende Komponente aufweist.

3. Fahrzeugsitz nach Anspruch 1 oder 2,
**dadurch gekennzeichnet,**
**dass** die Führung (2, 14, 15) eine Schiene (3), insbesondere ein Paar von Schienen (3), aufweist.

4. Fahrzeugsitz nach einem der vorangehenden Ansprüche,
**dadurch gekennzeichnet,**
**dass** der Fahrzeugsitz (1, 12, 13) eine Haltevorrichtung aufweist, durch die er auf der Führung (2, 14, 15), vorzugsweise durch eine lösbare Klemmung, in einen festgestellten, fixierten Zustand bringbar ist.

5. Fahrzeugsitz nach Anspruch 4,
**dadurch gekennzeichnet,**
**dass** die Haltevorrichtung dazu ausgebildet ist, den Fahrzeugsitz (1, 12, 13) entweder stufenlos oder an festgelegten Positionen auf der Führung (2, 14, 15) festzustellen.

6. Fahrzeugsitz nach Anspruch 4 oder 5,
**dadurch gekennzeichnet,**
**dass** die Haltevorrichtung eine Fernentriegelung (6) aufweist, die dazu ausgebildet ist, den Fahrzeugsitz (1, 12, 13) in dem festgestellten Zustand zu lösen.

7. Fahrzeugsitz nach einem der vorangehenden Ansprüche,
**dadurch gekennzeichnet,**
**dass** der Fahrzeugsitz (1, 12, 13) einen Antrieb (17) zum Bewegen des Fahrzeugsitzes (12, 13) entlang der Führung (14, 15) aufweist.

8. Fahrzeugsitz nach einem der vorangehenden Ansprüche,
**dadurch gekennzeichnet,**
**dass** der Fahrzeugsitz (1, 12, 13) wenigstens ein durch den Aktuator (8) verstellbares Flächenelement (7) aufweist, das dazu ausgebildet ist, den wenigstens einen Teil der Sitzfläche entlang wenigstens einer Achse (9, 10) zu neigen.

9. Fahrzeugsitz nach Anspruch 8,
**dadurch gekennzeichnet,**
**dass** der Aktuator (8) dazu ausgebildet ist, den wenigstens einen Teil der Sitzfläche und/oder das Flächenelement (7) elektrisch, mechanisch oder pneumatisch zu verstellen.

10. Fahrzeugsitz nach einem der vorangehenden Ansprüche ,
**dadurch gekennzeichnet,**
**dass** seine Führung (2, 14, 15) eine Längsverstellung aufweist, die dazu ausgebildet ist, den Fahrzeugsitz (1, 12, 13) entlang der Längsachse eines Kraftfahrzeugs (11) zu verstellen.

11. Kraftfahrzeug umfassend einen Fahrzeugsitz (1, 12, 13) nach einem der vorangehenden Ansprüche .

## Claims

1. Vehicle seat (1, 12, 13) that is movable along a guide (2, 14, 15) following a path curve, said guide being designed such that the vehicle seat (1, 12, 13) can be moved, due to a movement along the guide (2, 14, 15), away from the centre of the vehicle and can be rotated, with the front side thereof, about the vertical axis, in the direction of the centre of the vehicle,
**characterised in that**
the vehicle seat (1, 12, 13) has an actuator (8), which is designed to tilt at least a portion of a seat surface of the vehicle seat (1, 12, 13) about at least one axis (9, 10), whereby a tilting of the seat surface or of the at least one portion of the seat surface is coupled to a movement of the vehicle seat (1, 12, 13) such that a tilt angle of the seat surface or of the at least one portion of the seat surface increases relative to at least one of the axes (9, 10) with increasing distance of the vehicle seat (1, 12, 13) from the centre of the vehicle and is reduced with decreasing distance of the vehicle seat (1, 12, 13) from the centre of the vehicle.

2. Vehicle seat according to claim 1,
**characterised in that**
the guide (2, 14, 15) has a component which extends along the vertical axis of the vehicle seat (1, 12, 13).

3. Vehicle seat according to claim 1 or 2,
**characterised in that**
the guide (2, 14, 15) has a rail (3), in particular a pair of rails (3).

4. Vehicle seat according to any of the preceding claims,
**characterised in that**
the vehicle seat (1, 12, 13) has a holding device, by means of which it can be brought into a secured, fixed state on the guide (2, 14, 15), preferably by means of a releasable clamping.

5. Vehicle seat according to claim 4,
**characterised in that**
the holding device is designed to secure the vehicle seat (1, 12, 13) on the guide (2, 14, 15) either steplessly or at defined positions.

6. Vehicle seat according to claim 4 or 5,
**characterised in that**
the holding device has a remote unlocking system (6), which is designed to release the vehicle seat (1, 12, 13) in the secured state.

7. Vehicle seat according to any of the preceding claims,
**characterised in that**
the vehicle seat (1, 12, 13) has a drive (17) for moving the vehicle seat (12, 13) along the guide (14, 15).

8. Vehicle seat according to any of the preceding claims,
**characterised in that**
the vehicle seat (1, 12, 13) has at least one surface element (7) that is adjustable by the actuator (8) and is designed to tilt the at least one portion of the seat surface along at least one axis (9, 10).

9. Vehicle seat according to claim 8,
**characterised in that**
the actuator (8) is deigned to adjust the at least one portion of the seat surface and/or the surface element (7) electrically, mechanically or pneumatically.

10. Vehicle seat according to any of the preceding claims ,
**characterised in that**
its guide (2, 14, 15) has a longitudinal adjustment that is designed to adjust the vehicle seat (1, 12, 13) along the longitudinal axis of a motor vehicle (11).

11. Motor vehicle comprising a vehicle seat (1, 12, 13) according to any of the preceding claims.

## Revendications

1. Siège de véhicule (1, 12, 13) qui est mobile le long d'un guidage (2, 14, 15) décrivant une courbe de trajectoire qui est réalisé de sorte que le siège de véhicule (1, 12, 13) soit mobile par un mouvement le long du guidage (2, 14, 15) loin du milieu de véhicule et soit rotatif avec son côté avant autour de son axe vertical en direction du milieu de véhicule,
**caractérisé en ce**
**que** le siège de véhicule (1, 12, 13) présente un actionneur (8) qui est réalisé afin d'incliner au moins une partie d'une surface du siège de véhicule (1, 12, 13) autour d'au moins un axe (9, 10), dans lequel une inclinaison de surface de siège ou d'au moins une partie de la surface de siège est couplée au mouvement du siège de véhicule (1, 12, 13), de telle manière qu'un angle d'inclinaison de la surface de siège ou d'au moins une partie de la surface de siège par rapport à au moins un des axes (9, 10) augmente avec l'augmentation d'une distance du siège de véhicule (1, 12, 13) par rapport au milieu de véhicule et soit réduit avec une diminution d'une distance du siège de véhicule (1, 12, 13) par rapport au milieu de véhicule.

2. Siège de véhicule selon la revendication 1,
**caractérisé en ce**
**que** le guidage (2, 14, 15) présente un composant s'étendant le long de l'axe vertical du siège de véhicule (1, 12, 13).

3. Siège de véhicule selon la revendication 1 ou 2,
**caractérisé en ce**
**que** le guidage (2, 14, 15) présente un rail (3), en particulier une paire de rails (3).

4. Siège de véhicule selon l'une quelconque des revendications précédentes,
**caractérisé en ce**
**que** le siège de véhicule (1, 12, 13) présente un dispositif de retenue, par lequel il peut être amené sur le guidage (2, 14, 15), de préférence par un serrage amovible, dans un état fixé, bloqué.

5. Siège de véhicule selon la revendication 4,
**caractérisé en ce**
**que** le dispositif de retenue est réalisé afin de bloquer le siège de véhicule (1, 12, 13) en continu ou dans des positions fixées sur le guidage (2, 14, 15).

6. Siège de véhicule selon la revendication 4 ou 5,
**caractérisé en ce**
**que** le dispositif de retenue présente un déverrouillage distant (6) qui est réalisé afin de détacher le siège de véhicule (1, 12, 13) dans l'état bloqué.

7. Siège de véhicule selon l'une quelconque des revendications précédentes,
**caractérisé en ce**
**que** le siège de véhicule (1, 12, 13) présente un entraînement (17) pour le déplacement du siège de véhicule (12, 13) le long du guidage (14, 15).

8. Siège de véhicule selon l'une quelconque des revendications précédentes,
**caractérisé en ce**
**que** le siège de véhicule (1, 12, 13) présente au moins un élément de surface (7) réglable par l'actionneur (8) qui est réalisé afin d'incliner l'au moins une partie de la surface de siège le long d'au moins un axe (9, 10).

9. Siège de véhicule selon la revendication 8,
**caractérisé en ce**
**que** l'actionneur (8) est réalisé afin de régler électriquement, mécaniquement ou pneumatiquement l'au moins une partie de la surface de siège et/ou l'élément de surface (7).

10. Siège de véhicule selon l'une quelconque des revendications précédentes,
**caractérisé en ce**
**que** son guidage (2, 14, 15) présente un réglage longitudinal qui est réalisé afin de régler le siège de véhicule (1, 12, 13) le long de l'axe longitudinal d'un véhicule automobile (11).

11. Véhicule automobile comprenant un siège de véhicule (1, 12, 13) selon l'une quelconque des revendications précédentes.
